(19) Europäisches Patentamt
European Patent Office
Office européen des brevets

(11) Veröffentlichungsnummer : **0 087 049**
**B1**

(12) # EUROPÄISCHE PATENTSCHRIFT

(45) Veröffentlichungstag der Patentschrift : **12.11.86**

(51) Int. Cl.⁴ : **A 01 N 59/00**

(21) Anmeldenummer : **83101127.5**

(22) Anmeldetag : **07.02.83**

(54) **Desinfektionsmittelkonzentrat.**

(30) Priorität : **15.02.82 DE 3205318**

(43) Veröffentlichungstag der Anmeldung : **31.08.83 Patentblatt 83/35**

(45) Bekanntmachung des Hinweises auf die Patenterteilung : **12.11.86 Patentblatt 86/46**

(84) Benannte Vertragsstaaten :
**AT BE CH DE FR GB IT LI LU NL SE**

(56) Entgegenhaltungen :
**EP-A- 0 016 319**
**CH-A- 575 762**
**FR-A- 2 090 369**
**FR-A- 2 193 785**
**FR-A- 2 218 376**
**FR-A- 2 321 302**

(73) Patentinhaber : **Henkel Kommanditgesellschaft auf Aktien**
**Postfach 1100 Henkelstrasse 67**
**D-4000 Düsseldorf-Holthausen (DE)**

(72) Erfinder : **Montero, Esteban**
**Paseo 336 Num. 6**
**Castelldefels/Barcelona (ES)**
Erfinder : **Schindler, Norbert, Dr.**
**Am Mersehof 12**
**D-4018 Langenfeld (DE)**

**EP 0 087 049 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein flüssiges Konzentrat zur Verwendung als Desinfektionsmittel auf Basis von Wasserstoffperoxid.

Bei den Mitteln, die für die Flächendesinfektion zur praktischen Anwendung kommen, stehen nach wie vor Aldehyde oder Phenole enthaltende Zusammensetzungen im Vordergrund. Das ist vor allem darauf zurückzuführen, daß aldehydische und phenolische Mittel — unter der Voraussetzung, daß die Wirkstoffe in der adäquaten Konzentration zur Anwendung kommeneine rasche und breite antimikrobielle Wirkung gewährleisten. Derartige Mittel sind jedoch mit dem Nachteil behaftet, daß die vorhandenen Wirkstoffe auch für höhere Lebewesen toxisch sind ; weiterhin ist ihre Anwendung mit einer lange andauernden Geruchsbelästigung verbunden.

Die desinfizierende Wirkung von wässrigen Wasserstoffperoxidlösungen ist bekannt. Wasserstoffperoxid wäre an sich ein ideales Desinfektionsmittel, da es die schädlichen Mikroorganismen nicht vergiftet, sondern oxydativ zerstört, und nach dem Gebrauch in relativ kurzer Zeit in Wasser und Sauerstoff zerfällt. Wässrige Wasserstoffperoxidlösungen haben bis jetzt jedoch — offensichtlich wegen ihrer Instabilität — keinen Eingang in die Flächendesinfektion gefunden.

In der FR-A 2 321 302 werden Konzentrate für die Herstellung mikrobizider Mittel auf der Basis von aliphatischen Monocarbonsäuren beschrieben, die bis zu 20 % an Peressigsäure oder Perpropionsäure sowie die entsprechende Carbonsäure, eine große überschüssige Menge an Wasserstoffperoxid sowie eine organische Phosphonsäure bzw. eines ihrer sauren, wasserlöslichen Salze enthalten. In derartigen Konzentraten ließ sich zwar eine zufriedenstellende Menge an mikrobizid wirksamer Verbindung sicherstellen, jedoch entstand im Laufe der Reaktion Essigsäure bzw. Propionsäure, die zu der für diese Carbonsäuren charakteristischen Geruchsbelästigung führten. Zudem wiesen derartige Konzentrate einen zur Aufrechterhaltung des Gleichgewichts

$$\text{Percarbonsäure} \rightleftharpoons \text{Carbonsäure } H_2O_2$$

notwendigen sehr hohen Gehalt an Wasserstoffperoxid auf, der die Handhabung derartiger Konzentrate aus der Sicht der Arbeitssicherheit erschwerte.

In der CH-A 575 762 werden Desinfektionsmittel in Form einer Öl-in-Wasser-Emulsion offenbart, deren wäßrige Phase Wasserstoffperoxid sowie eine gewisse Menge alkalisierender Zusätze in Form von Natriumdihydrogenphosphat-hydrat und deren Ölphase zahlreiche öl-lösliche organische Komponenten enthielt. Derartige Desinfektionsmittel weisen pH-Werte im Bereich von 5 bis 8 auf und sind daher für den sofortigen Verbrauch bestimmt, da bei derart hohen ph-Werten das Wasserstoffperoxid relativ rasch zerfällt. Eine längere Lagerzeit führt zu einem deutlich verringerten und damit für eine befriedende Desinfektion nicht mehr ausreichenden Wasserstoffperoxid-Gehalt.

In der FR-A 2 218 376 werden Zusammensetzungen zur Verbesserung der Lagerfähigkeit von Papierpasten und feuchten Papiermassen beschrieben. Die Lagerfähigkeit, d. h. in diesem Fall ein ausreichender Schutz gegen Schimmelbefall, wird dadurch bewerkstelligt, daß den Papiermassen ein Wasserstoffperoxid und weitere Zusätze enthaltende Lösungen zugesetzt wird. In diesem Fall liegt jedoch die Wasserstoffperoxid-Konzentration in den Zusammensetzungen deutlich unter einer für Desinfektionsmittel erwünschten Konzentration und vermag nicht sicherzustellen, daß eine aldehydischen oder phenolischen Desinfektionsmitteln gleichkommende Wirkung erziehlt wird.

Der vorliegenden Erfindung lag die Aufgabe zugrunde, ein toxikologisch unbedenkliches Desinfektionsmittel zu schaffen, das bei der Anwendung zu keiner Geruchsbelästigung führt und das in seiner Wirkungsweise etwa den aldehydischen und phenolischen Desinfektionsmitteln gleichkommt.

Die Lösung dieser Aufgabe ist ein flüssiges Konzentrat zur Verwendung als Desinfektionsmittel auf Basis eines Gemisches von Wasserstoffperoxid, Komplexbildner und gegebenenfalls eines Tensids in Wasser, dadurch gekennzeichnet, daß es

1-15 Gewichtsprozent Wasserstoffperoxid,

1-30 Gewichtsprozent einer oder mehrerer saurer Phosphorverbindungen aus der Gruppe Phosphorsäure, Natriumdihydrogenphosphat, Kaliumdihydrogenphosphat und Ammoniumdihydrogenphosphat,

0,1-5 Gewichtsprozent eines oder mehrerer Komplexbildner aus der Gruppe Alkanpolyphosphonsäuren, Aminopolyphosphonsäuren, Hydroxyalkanpolyphosphonsäuren, Phosphonocarbonsäuren, Aminopolycarbonsäuren und deren Alkalimetallsalze,

Rest : Wasser oder Wasser und mit Wasser mischbares Lösungsmittel,

sowie gegebenenfalls

bis zu 20 Gewichtsprozent eines nichtionischen oder amphoteren Tensids,

1-15 Gewichtsprozent einer oder mehrerer desinfizierend wirkender quartärer Ammoniumverbindungen oder

1-15 Gewichtsprozent 1,1′-Hexamethylenbis [5-(4-chlorphenyl)-biguanid]-diglukonat

enthält.

Als saure Phosphorverbindungen kommen insbesondere Orthophosphorsäure und saure Salze der

Orthophosphorsäure wie Natriumdihydrogenphosphat, Kaliumdihydrogenphosphat und Ammoniumdihydrogenphosphat in Betracht.

Zur Stabilisierung des Wasserstoffperoxids enthält das erfindungsgemäße Konzentrat einen gegenüber Schwermetallionen wirksamen Komplexbildner. Für diesen Zweck verwendete Komplexbildner sind Alkanpolyphosphonsäuren, Amino- und Hydroxyalkanpolyphosphonsäuren und Phosphonocarbonsäuren, beispielsweise Methandiphosphonsäure, 1-Aminoethan-1,1-diphosphonsäure, Aminotri-(methylenphosphonsäure), Ethylendiamintetra-(methylenphosphonsäure), Hydroxyethan-1,1-diphosphonsäure und 2-Phosphonobutan-1,2,4-tricarbonsäure oder Aminopolycarbonsäuren wie z. B. Nitrilotriessigsäure, Ethylendiamintetraessigsäure oder Hydroxyethylethylendiamintriessigsäure sowie die Alkalisalze der genannten Säuren.

Wenn neben der antimikrobiellen Wirkung eine zusätzliche Reinigungswirkung erwünscht ist, können die Mittel nichtionische Tenside oder Amphotenside enthalten. Als nichtionische Tenside kommen Anlagerungsprodukte von 4 bis 40, vorzugsweise 4 bis 20 Mol Ethylenoxid an 1 Mol Fettalkohol, Alkylcyclohexanol, Alkylphenol, Fettsäure, Fettamin, Fettsäureamid oder Alkansulfonamid in Betracht. Von besonderem Interesse sind Anlagerungsprodukte von 5 bis 16 Mol Ethylenoxid an Kokos- oder Talgfettalkohole, an Oleylalkohol und an Mono-, Di- oder Trialkylphenole sowie an Monoalkylcyclohexanole mit 6 bis 14 Kohlenstoffatomen in den Alkylresten. Als Amphotenside kommen die Derivate von sekundären oder tertiären aliphatischen Aminen in Frage, wobei die aliphatischen Reste geradkettig oder verzweigt sein können und ein Rest 8 bis 18 Kohlenstoffatome und ein anderer eine löslichmachende anionische Gruppe, beispielsweise eine Carboxy-, Sulfo-, Sulfato-, Phosphato- oder Phosphonogruppe enthält.

Als Lösungsmittel für die flüssigen Konzentrate dienen Wasser und Gemische aus Wasser und solchen organischen Lösungsmitteln, die mit Wasser mischbar sind, insbesondere niedere Alkohole wie Methanol, Ethanol, Propanol und Isopropanol.

In einer bevorzugten Ausführungsform enthalten die erfindungsgemäßen Konzentrate zusätzlich 1 bis 15 Gewichtsprozent desinfizierend wirkende quartäre Ammoniumverbindungen, insbesondere solche, die neben einem langkettigen aliphatischen und zwei kurzkettigen aliphatischen Kohlenwasserstoffresten einen aromatischen, über ein aliphatisches Kohlenstoffatom mit dem Stickstoffatom verknüpften, oder einen aliphatischen, Doppelbindungen aufweisenden Kohlenwasserstoffrest im Molekül enthalten. Beispiele für derartige antimikrobielle quartäre Ammoniumverbindungen sind Dimethylbenzyl-dodecylammoniumchlorid, Dimethyl-benzyl-tetradecylammoniumchlorid, Dimethyl-(ethylbenzyl)-dodecylammoniumchlorid, Dimethyl-benzyl-decylammoniumbromid, Dimethyl-benzyl-octylammoniumchlorid, Methylethyl-benzyl-dodecylammoniumchlorid, Dibutyl-allyldodecylammoniumchlorid, Ethyl-cyclohexyl-allyl-dodecylammoniumchlorid, Ethyl-crotyl-(diethylaminoethyl)-dodecylammoniumchlorid und insbesondere Kokosalkyl-dimethyl-benzylammoniumchlorid, in dem sich der Kokosalkylrest von dem hydrierten Fettsäuregemisch des Kokosöls ableitet. Dimethyldidecylammoniumchlorid ist ebenfalls wirksam.

In einer weiteren speziellen Ausführungsform enthalten die erfindungsgemäßen Konzentrate zusätzlich 1 bis 15 Gewichtsprozent 1,1'Hexamethylenbis-[5-(4-chlorphenyl)-biguanid]-diglukonat.

Neben den genannten Komponenten können die erfindungsgemäßen Konzentrate weitere, in flüssigen Desinfektionsmitteln übliche Bestandteile enthalten, beispielsweise Farb- und Duftstoffe.

Für die Verwendung in der Desinfektion, insbesondere in der Flächendesinfektion werden die erfindungsgemäßen Konzentrate mit Wasser zu Lösungen verdünnt, die 0,1 bis 5 Gewichtsprozent Konzentrat, insbesondere 0,5 bis 3 Gewichtsprozent Konzentrat enthalten.

Die aus den erfindungsgemäßen Konzentraten erhaltenen einsatzfertigen Lösungen eignen sich zur Desinfektion im nicht-therapeutischen Bereich; sie eignen sich insbesondere als Flächendesinfektionsmittel für Krankenhäuser, Schulen, Badeanstalten, öffentliche Verkehrsmittel und gewerbliche Betriebe wie Schlachthöfe, Molkereien, Brauereien und Wäschereien.

Die nachstehenden Beispiele sollen den Gegenstand der Erfindung erläutern, ohne ihn darauf zu beschränken.

## Beispiel 1

Durch Vermischen der Komponenten wurde ein Konzentrat der folgenden Zusammensetzung hergestellt:

3 Gew.-% Orthophosphorsäure
5 Gew.-% Wasserstoffperoxid
0,5 Gew.-% 1-Hydroxyethan-1,1-diphosphonsäure
3 Gew.-% handelsübliches Alkyl-benzyl-dimethylammoniumchlorid (durchschnittliche Kettenlänge des Alkylrestes = $C_{14}$)
88,5 Gew.-% Wasser

Die antimikrobielle Wirkung dieses Konzentrats bei der Flächendesinfektion wurde nach dem Scheuerdesinfektionstest ermittelt. Dieses Prüfverfahren ist den Richtlinien für die Prüfung chemischer Desinfektionsmittel, herausgegeben von der deutschen Gesellschaft für Hygiene und Mikrobiologie

(1959), entnommen.

Als Modelle für kontaminierte Flächen dienten 6 × 6 cm große Stücke von lackierten Holzplatten, PVC-Fußbodenplatten und Keramikfliesen. Zur Kontamination der Fläschen wurde eine Suspension von Staphyloccus aureus mit $10^8$-$10^9$ Keimen/ml verwendet. Auf jede Testfläche wurde 0,1 ml Keimsuspension pipettiert und mit Hilfe eines Glasspatels gleichmäßig verteilt. Nach dem Antrocknen der Keimsuspension wurden die Testflächen mit Hilfe eines Wattetupfers gleichmäßig mit der Desinfektionslösung benetzt.

Als Desinfektionslösungen dienten 2-bzw. 1-gewichtsprozentige Lösungen des oben angegebenen Konzentrats.

Die 2-gewichtsprozentige Lösung hatte einen pH-Wert von 2,0 ; die 1 gewichtsprozentige Lösung zeigte einen pH-Wert von 2,5.

Nach Einwirkungszeiten von 1, 2, 4 und 6 Stunden wurde jeweils ein Viertel der behandelten Flächen mit sterilen Wattetupfern abgerieben, die durch kurzes Eintauchen in Bouillon angefeuchtet waren. Die Tupfer wurden auf Bouillon-Agarplatten (Merck-Standard-I-Bouillon + 3 Gewichtsprozent Tween 80® + 0,3 Gewichtsprozent Lecithin + 0,1 Gewichtsprozent Histidin) angestrichen. Anschließend wurden die Agarplatten 48 Stunden lang bei 37 °C bebrütet.

Bei der anschließenden Auswertung wurde gefunden, daß die Abtötungszeiten der 2 gewichtsprozentigen Lösung auf allen Testflächen 2 Stunden betrugen. Die Abtötungszeiten der 1 gewichtsprozentigen Lösung betrugen auf allen Testflächen 6 Stunden.

## Beispiel 2

Nachstehend werden zwei weitere erfindungsgemäße Zubereitungen angegeben :

Flächendesinfektionsmittel

5 Gew.-% Kaliumdihydrogenphosphat
5 Gew.-% Wasserstoffperoxid
0,1 Gew.-% Ethylendiamintetra(Methylenphosphonsäure)
5 Gew.-% handelsübliches Alkyl-benzyl-dimethylammoniumchlorid (durchschnittliche Kettenlänge des Alkylrestes = $C_{14}$)
84,9 Gew.-% Wasser

Desinfizierendes Reinigungsmittel für harte Oberflächen

12 Gew.-% Anlagerungsprodukt von 10 Mol Ethylenoxid an 1 Mol $C_{10}$-$C_{12}$-Fettalkohol
4 Gew.-% Orthophosphorsäure
5 Gew.-% Wasserstoffperoxid
3 Gew.-% Nitrilotriessigsäure
3 Gew.-% handelsübliches Alkyl-benzyl-dimethylammoniumchlorid (durchschnittliche Kettenlänge des Alkylrestes = $C_{14}$)
10 Gew.-% Isopropanol
63 Gew.-% Wasser

Desinfizierendes Reinigungsmittel für harte Oberflächen

10 Gew.-% Anlagerungsprodukt vom 10 Mol Ethylenoxid an Nonylphenol
3 Gew.-% Orthophosphorsäure
3 Gew.-% Wasserstoffperoxid
0,5 Gew.-% 1-Hydroxyäthan-1,1-diphosphonsäure
3 Gew.-% Dodecyldi-(aminoethyl)-glycinhydrochlorid
80,5 Gew.-% Wasser

Flächendesinfektionsmittel

5 Gew.-% Wasserstoffoxid
5 Gew.-% Orthophosphorsäure
1 Gew.-% 1-Hydroxyäthan-1,1-diphosphonsäure
3 Gew.-% 1,1'-Hexamethylenbis-[5-(4-chlorphenyl)-biguanid]-diglukonat
86 Gew.-% Wasser

**Patentanspruch**

Flüssiges Konzentrat zur Verwendung als Desinfektionsmittel auf Basis eines Gemisches von

Wasserstoffperoxid, Komplexbildner und gegebenenfalls eines Tensids in Wasser, dadurch gekennzeichnet, daß es

1-15 Gewichtsprozent Wasserstoffperoxid,

1-30 Gewichtsprozent einer oder mehrerer saurer Phosphorverbindungen aus der Gruppe Phosphorsäure, Natriumdihydrogenphosphat, Kaliumdihydrogenphosphat und Ammoniumdihydrogenphosphat,

0,1-5 Gewichtsprozent eines oder mehrerer Komplexbildner aus der Gruppe Alkanpolyphosphonsäuren, Aminopolyphosphonsäuren, Hydroxyalkanpolyphosphonsäuren, Phosphonocarbonsäuren, Aminopolycarbonsäuren und deren Alkalimetallsalze,

sowie gegebenenfalls

bis zu 20 Gewichtsprozent eines nichtionischen oder amphoteren Tensids,

1-15 Gewichtsprozent einer oder mehrerer desinfizierend wirkender quartärer Ammoniumverbindungen oder

1-15 Gewichtsprozent 1,1'-Hexamethylenbis [5-(4-chlorphenyl)-biguanid]-diglukonat

Rest : Wasser oder Wasser und mit Wasser mischbares Lösungsmittel,

enthält.

**Claim**

A liquid concentrate for use as a disinfectant based on a mixture of hydrogen peroxide, complexing agent and, optionally, a surfactant in water, characterized in that it contains

from 1 to 15 % by weight hydrogen peroxide,

from 1 to 30 % by weight of one or more acidic phosphorus compounds from the group comprising phosphoric acid, sodium dihydrogen phosphate, potassium dihydrogen phosphate and ammonium dihydrogen phosphate,

from 0.1 to 5 % by weight of one or more complexing agents from the group comprising alkane polyphosphonic acids, aminopolyphosphonic acids, hydroxyalkane polyphosphonic acids, phosphonocarboxylic acids, aminopolycarboxylic acids and alkali metal salts thereof,

and optionally

up to 20 % by weight of a nonionic or amphoteric surfactant,

from 1 to 15 % by weight of one or more quaternary ammonium compounds having a disinfecting effect or

from 1 to 15 % by weight of 1,1'-hexamethylene-bis-[5-(4-chlorophenyl)-biguanide]-digluconate

remainder : water or water and water-miscible solvent.

**Revendication**

Concentré liquide à utiliser comme agent désinfectant, à base d'un mélange de peroxyde d'hydrogène, d'un formateur de complexes et éventuellement d'un tensioactif dans de l'eau, caractérisé en ce qu'il contient

1-15 % en poids de peroxyde d'hydrogène,

1-30 % en poids d'un ou plusieurs composés acides du phosphore du groupe acide phosphorique, dihydrogénophosphate de sodium, dihydrogénophosphate de potassium et dihydrogénophosphate d'ammonium,

0,1-5 % en poids d'un ou plusieurs formateurs de complexes du groupe acides alcanepolyphosphoniques, acides aminopolyphosphoniques, acides hydroxyalcane-polyphosphoniques, acides phosphonocarboxyliques, acides aminopolycarboxyliques et de leurs sels de métaux alcalins,

de même qu'éventuellement

jusqu'à 20 % en poids d'un tensioactif non ionique ou amphotère,

1-15 % en poids d'un ou plusieurs composés d'ammonium quaternaires à action désinfectante ou

1-15 % en poids de digluconate de 1,1'-hexaméthylène-bis [5-(4-chlorophényl)-biguanide],

le restant étant de l'eau ou de l'eau et un solvant miscible avec l'eau.